# EUROPEAN PATENT SPECIFICATION

(11) **EP 3 817 320 B1**
(45) Date of publication and mention of the grant of the patent: **04.01.2023**
(21) Application number: 19382933.0
(22) Date of filing: 28.10.2019
(51) Int. Cl.: H04L 9/40, H04L 9/00, G06Q 50/18, G06Q 50/20

(54) **BLOCKCHAIN-BASED SYSTEM FOR ISSUING AND VALIDATING CERTIFICATES**
BLOCKKETTENBASIERTES SYSTEM ZUR AUSGABE UND VALIDIERUNG VON ZERTIFIKATEN
SYSTÈME À BASE DE CHAÎNE DE BLOCS POUR L'ÉMISSION ET LA VALIDATION DE CERTIFICATS

(43) Date of publication of application: 05.05.2021
(73) Proprietor: Universidad Internacional de La Rioja (UNIR), 26006 Logroño (La Rioja) (ES)
(72) Inventor: PANIAGUA DÍEZ, Fidel, 26006 Madrid (ES); NOMBELA PÉREZ, Juan José, 26006 Madrid (ES); GONZÁLEZ CRESPO, Rubén, 26006 Madrid (ES); BURGOS SOLANS, Daniel, 26006 Madrid (ES)
(74) Representative: Tribalyte Ideas

(56) References cited:
- US-A1- 2018 082 256
- NITIN KUMAVAT ET AL: "Certificate Verification System using Blockchain", INTERNATIONAL JOURNAL FOR RESEARCH IN APPLIED SCIENCE AND ENGINEERING TECHNOLOGY, vol. 7, no. 4, 30 April 2019 (2019-04-30), pages 53-57, XP055685589, DOI: 10.22214/ijraset.2019.4010

## Description

### FIELD OF THE INVENTION

The present invention relates generally to information technology (IT) and, more particularly, to a blockchain-based system for the issue and validation of certificates, and preferably academic certificates. The system ensures both immutability and validity of the issued certificates, regardless of whether a certifying authority (for example, an academic institution) exists or not, as well as data confidentiality and access control of the certificates by the user (for example, a student).

### BACKGROUND OF THE INVENTION

The counterfeiting of academic certificates is a worldwide problem and various technical solutions have been applied to mitigate it. In the last years, the core of these prior-art solutions focuses mainly on adding a barcode, a quick response (QR) code, a uniform resource locator (URL), etc. to the academic certificate, such that its validity can be checked with a remote validation device and/or service. All these solutions depend on a service provider that performs the validation service, thereby raising trust issues due to the need of a third party for validating the certificates.

A blockchain can be defined as a series of immutable data records that are distributed in a peer-to-peer (P2P) network formed by nodes without central authorities. Every node in the network has access to the information registered in the blockchain and the immutability of the stored data is ensured using cryptography. More recently, the evolution of blockchain technology has allowed to share not only data but also programs, which are known as smart contracts. Smart contracts can be stored in the blockchain and executed by any of the nodes belonging to it, ensuring that their executions (commonly known as "transactions") cannot be modified and avoiding denial-of-service (DoS) attacks. The verification of transactions in a blockchain is achieved through consensus operations carried out by the users or the nodes in the network.

Blockchain networks can be generally classified into the following categories, according to their access/permission policy:
- Public permissionless networks: the entities forming part of the network (users and nodes) do not need to request permission in order to interact with the blockchain. Also, every entity in the network can run and verify transactions, which are public.
- Public permission networks: every entity must be identified before it can participate in the network and only validator nodes can verify transactions, which are public.
- Private networks: the entities have well-known identities and only few nodes can verify transactions, which are private.

The specific features and advantages of blockchain technologies have been already adopted as an anti-counterfeiting solution for academic certificates in the prior art. Nowadays there are several known platforms and services for issuing and validating academic certificates based on this technology. Some relevant examples are listed below:
- Both École Supérieure d'Ingénieurs Leonard de Vinci, Holberton School, CESYT and MIT Media Lab systems use Bitcoin blockchain technology and cryptographic hash functions (CHF) for mapping data of arbitrary size to a bit string of a fixed size (the "hash value" or "hash", or "message digest") associated to the academic certificates. In these systems, a validation operation checks if the hash of the digital copy of the academic certificate is equal to the hash stored in Bitcoin.
- Greek Research and Technology Network (GRNET) system follows the same idea as the previous solutions, storing the hash of the academic certificate in blockchain, but using Cardano (a different blockchain network) instead of Bitcoin. Besides, this system also records the entire chain of verification steps in the blockchain, allowing to trace proof of a degree and the past or current grant status thereof.
- Blockcerts is an open standard for managing certificates in a blockchain. It was originally based on the Bitcoin "Mit Media Lab" technology, but nowadays it is also compatible with Ethereum networks.
- Smartdegrees uses Quorum, based on Ethereum, to create a private blockchain and to register the digital certificates therein.

Even though there are many other examples of blockchain solutions for verifying academic certificates, they all share that the data (for example, the hash values) associated to the certificates is stored in a private network. Therefore, the generated information cannot be operated within a public (permissionless or permissioned) blockchain network, due to confidentiality or security reasons. This is an undesired limitation in real-world validation operations, where public and private access and data management must necessarily coexist. For example, in the context of academic institutions, naturally both the students and the institutions themselves are subject to both public and private requests and submission of information.

Even if one tried to implement a public-permissioned blockchain (for example, in a Quorum blockchain) for validating certificates, in order to ensure privacy and to fulfil confidentiality and data protection legal requirements the following limitations also arise:
- The data of the certificates are only available by their owner or by the academic institution that has issued them. Sharing certificates, for example with companies, can only be done using external services, such as a web server, but never within the blockchain network itself.
- It is not possible to use the certificates' data in other processes deployed within the blockchain network, such as for instance a university registration system.
- It does not provide the option of creating trust relationships between academic institution in order to share the student accounts, therefore requiring the students to have an account for each academic institution registered in the blockchain.

A known blockchain-based system for issuing certificates is described in patent application US 2018/082256 A1. However, this system requires storing the information associated to the certificates (smart contracts) in a database associated to each user's digital wallet. This proposal is resource consuming, since certificates need to be copied proportionally to the number of users, thus lacking scalability. The system also involves a high data risk which is also proportional to the number of users, for example when third parties need to access their certificates for their verification.

Given the above limitations in the known techniques, there is a need for a public-permissioned blockchain which can efficiently validate the certificates, while also ensuring confidentiality, data protection and ease of use even when several certification entities participate in the system. The present invention proposes a solution to said need, through a novel blockchain-based system for the issue and validation of certificates, which is especially advantageous for the validation of academic certificates.

### BRIEF DESCRIPTION OF THE INVENTION

A first object of the present invention relates, without limitation, to the development of a system for issuing and validating certificates, comprising:
- a public permissioned blockchain network, configured with:
   ∘ a plurality of nodes connected through a communication network;
   ∘ a certificate service repository comprising the data of the certificates and emission/revocation logic thereof; and
   ∘ access control logic comprising one or more smart contracts to manage the access control to the private information stored in the certificate service repository.

Advantageously, the system further comprises:
- a certifying institution network, comprising one or more computing means connected to a communication network and configured with a plurality of computing processes and operations, wherein the certifying institution network further comprises:
   ∘ a public-permission blockchain node of the permissioned blockchain network, managed by a certifying institution;
   ∘ a distributed peer-to-peer storage/content distribution platform;
      wherein said blockchain node is configured to allow both the interaction with the blockchain network through the execution of smart contracts and the storage of copies of the certificates in the distributed storage/content distribution platform;
   ∘ one or more computing means configured with a certificate management service adapted for issuing and revoking certificates by the certifying institution, wherein the certificate management service is connected through a communication network with the public permissioned blockchain network, through the public-permission blockchain node and the distributed storage/content distribution platform;
   ∘ one or more computing means configured with a plurality of offchain services used by the certifying institution to manage the access to the certificates by users not connected to the public-permissioned blockchain network, wherein the offchain services are also connected with the public-permissioned blockchain network, through the public permission blockchain node and the distributed storage/content distribution platform;
- an external network comprising a plurality of computing devices used by users or other third-party service providers not connected to the blockchain environment, configured to interact with the certificates stored at the storage/content distribution platform through the offchain services.

In a preferred embodiment of the invention, at least part of the information comprised in the repository is encrypted.

In a further preferred embodiment of the invention, the access control logic is configured through a hierarchy of user information, group information and resource information, wherein the resource information is encrypted in the certificate service repository.

In yet a further preferred embodiment of the invention, the resource information is encrypted through an encryption key with a shared secret obtained as a result of an Elliptic-Curve Diffie Hellman (ECDH) protocol. More preferably, the elliptic curves of the protocol comprise the curve Secp256k1.

In a further preferred embodiment of the invention, the computing devices of the external network comprise at least a mobile device connected to the offchain service through a communication network.

In a further preferred embodiment of the invention, the offchain services are configured to perform are one or more of the following operations, through one or more computing devices:
- issue certificates: the certifying institution can issue academic certificates and register in the blockchain network, by means of the public permission blockchain node and the distributed storage/content distribution platform (preferably, the result of the issue operation is adapted to generate a unique URL of the academic certificate);
- set permissions: the users or the certifying institution can manage the permissions of the certificates;
- list certificates: the certifying institution can list issued certificates;
- revoke certificates: the certifying institution can revoke certificates;
- visualise certificates: the certifying institution, the users or other third-party service providers can visualise an academic certificate.

### DESCRIPTION OF THE DRAWINGS

The characteristics and advantages of this invention will be more apparent from the following detailed description, when read in conjunction with the accompanying drawings, in which:
Figure 1 represents the architecture of a system according to a preferred embodiment of the invention, where its essential elements, namely its environments, servers and services are shown.
Figure 2 represents the participants that can interact with the system of the invention and their main operations, for a preferred embodiment thereof.

### NUMERICAL REFERENCES USED IN THE DRAWINGS

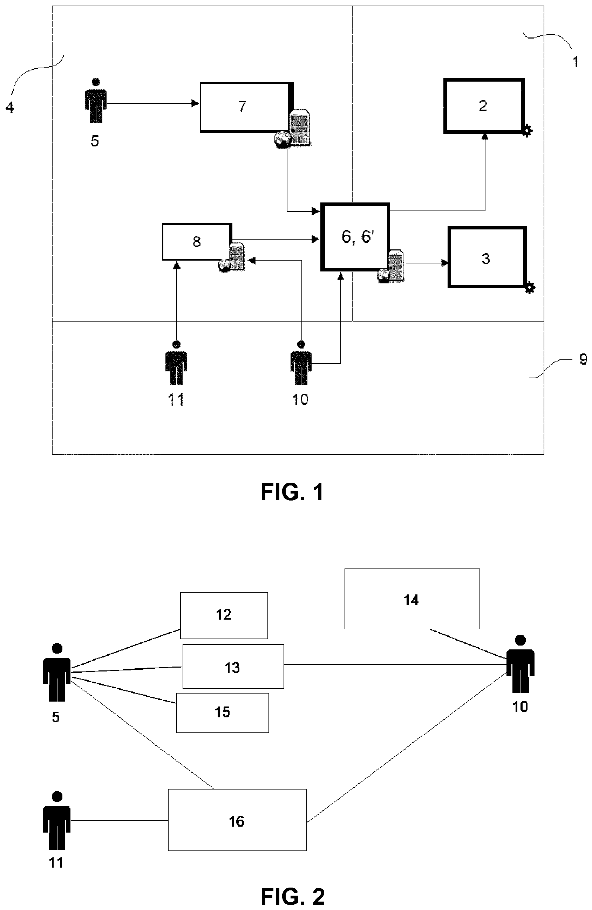

In order to provide a better understanding of the technical features of the invention, the referred Figures 1-2 are accompanied of a series of numeral references which, with illustrative and non limiting character, are hereby represented:

| | |
|---|---|
| (1) | Public-permissioned blockchain network |
| (2) | Certificate service repository |
| (3) | Access control logic |
| (4) | Certifying institution network |
| (5) | Certifying institution |
| (6) | Blockchain node |
| (6') | Distributed storage/content distribution platform |
| (7) | Certificate Management |
| (8) | Offchain |
| (9) | External network environment |
| (10) | User |
| (11) | Other entity |
| (12) | Issue certificate |
| (13) | Set permissions |
| (14) | List certificates |
| (15) | Revoke certificate |
| (16) | Visualise certificate |

### DETAILED DESCRIPTION OF THE INVENTION

In the following description, for purposes of explanation and not limitation, details are set forth in order to provide a thorough understanding of the present invention. However, it will be apparent to those skilled in the art that the present invention may be practiced in other embodiments that depart from these details and descriptions without departing from the scope of the invention. Certain embodiments will be described below with reference to the drawings (Figures 1-2) wherein illustrative features are denoted by reference numerals.

A detailed description of the invention, whose architecture is shown in Figure 1, is shown below. The purpose and utility of the different environments represented in the figure are:
- Public permissioned blockchain network (1): it comprises a plurality of nodes (i.e. computing processes configured in one or more computing means, wherein the nodes are connected to a communication network), where every node stores at least a part of a blockchain (i.e. data distributed along the nodes) and one or more processes or smart contracts, configured with operations over said blockchain. Preferably, the blockchain further comprises:
   ∘ Certificate service repository (2): it contains the information of the certificates and their emission/revocation logic. More preferably, at least part of the information comprised in the repository (2) is encrypted to preserve its confidentiality.
   ∘ Access control logic (3): it comprises one or more smart contracts to manage the access control to the private information stored in the certificate service repository (2). The access control logic (3) is preferably configured through a hierarchy of users, groups and resources (similarly to the access control in Linux operative systems). Resources preferably refer to the information encrypted in the certificate service repository (2) and permissions can be assigned to the users, groups or others (analogous to owner, group and others in a Linux file system). The smart contracts of the access control logic (3) provide functions for the creation, maintenance and deletion of users, groups and resources (for example, "useradd", "adduser", "groupadd", "Is", "touch", "cat", or other similar functions used in Linux systems), including the definition of permissions ("chown", "chgrp", "chmod", etc.). Preferably, the features of these three elements can be summarised in:
      - User: it is represented in the system by an identifier and a public key. Users have a default group and there is a root user that can create users and groups and set permissions globally.
      - Group: it is represented in the system by a public key, a private key, encrypted with a group key, and an identifier of the group account. Users with permissions in the group can use the group key and interact in the system with the group identity.
      - Resource: it is defined with an owner, other and group permissions. Besides, the encryption keys are only available to those users and groups that have permissions for the resource. The resources also allow defining access control lists to grant additional permissions to users and groups.
   Preferably, the system encrypts the resource and group encryption keys with a shared secret obtained as a result of an Elliptic-Curve Diffie Hellman (ECDH) protocol between the users or groups with permissions and the root users. It assures that every resource and group in the system can be managed by the root user. More preferably, the elliptic curves used comprise the curve *Secp256k1.*
- Certifying institution network (4): it comprises a plurality of computing processes and operations configured in one or more computing means, connected to a communication network. Preferably, the certifying institution network (4) represents a certifying institution, such as an academic institution and further comprises:
   ∘ A public permission blockchain node (6) and a distributed storage/content distribution platform (6'): the certifying institution network (4) comprises a regular node (6) of the blockchain, controlled by the certifying institution (5). This node (6) allows both the interaction with the blockchain (through the execution of smart contracts) and the storage of copies (preferably, encrypted) of the certificates in a distributed storage/content distribution platform (6'), such as Swarm. Swarm is a permissionless, decentralised storage and communication infrastructure, based on peer-to-peer accountancy of the resources, allowing nodes in a blockchain to trade "resource for resource", but offering compensation to nodes consuming less than they serve.
   ∘ Certificate management service (7): It comprises one or more computing means configured with a plurality of services used by the certifying institution (5) to issue and revoke the certificates. This service (7) is connected through a communication network with the public permissioned blockchain network (1), through the public permission blockchain node (6) and the distributed storage/content distribution platform (6').
   ∘ Offchain (8): It comprises one or more computing means configured with a plurality of services used by the certifying institution (5) to manage the access to the certificates by users not connected to the public permissioned blockchain network (1). The offchain (8) services are also connected with the public permissioned blockchain network (1), through the public permission blockchain node (6) and the distributed storage/content distribution platform (6'). By means of the offchain (8) service, any user who is not connected to the blockchain environment (1) may access it using this service (for example, implementing it as a web service where the user can access the certificate by introducing a URL thereof). This allows the possibility to share certificates with other third-party users or entities, by granting or revoking a sharing option by the owner of the certificate at any time.
- External network (9) environment: it represents the plurality of computing devices used by users (10) (for example, students) and other entities (11) not connected to the blockchain environment (1), in order to interact with the certificates stored at the storage/content distribution platform (6') through the offchain service (8). The computing devices used by the users (10) and other entities can comprise any computer or mobile device connected to the offchain service (8) through a communication network. In a preferred embodiment of the invention, the operations that these entities (10, 11) can perform are one or more of the following:
   ∘ Users (10) (for example, students):
      - They can visualise and share their own certificates using a web service, for example by means of an unpredictable URL. The URL contains a unique and unpredictable ID resulting from applying the *KECCAK-256* hash function to the result of signing the parameters of the certificate with an elliptic-curve digital signature algorithm (ECDSA) function.
      - They can grant or revoke access to the academic certificate using a URL.
      - They can be connected to the blockchain network (1) through an account generated by a certifying institution (5) to which they are connected thereto, by means of the public permission blockchain node (6) and the distributed storage/content distribution platform (6'). In this way, the information associated to the certificates can be synchronised with a web browser and stored in a temporary storage space thereof. The connection between the users (10) and the blockchain network (1) can be established by one or more web services, through a web browser.
   ∘ Other entities (11) (for example, third-party service providers, such as human resources managers):
      - They can visualise the certificates with a unique URL, if permission is granted by the users (10). The access if preferably established through the offchain service (8).

In a preferred embodiment of the invention applied to academic certificates (depicted in Figure 2), the functionalities that can be executed by the existing entities (5, 10, 11) (academic institutions, students and other entities, respectively) taking part in the system are one or more of the following:
- Issue certificate (12): the academic institution (5) can issue academic certificates and they will be registered in the blockchain network (1), by means of the public permission blockchain node (6) and the distributed storage/content distribution platform (6'). The result of the issue operation (12) preferably also generates a unique URL of the academic certificate and a notification to the student (5) with a link and a password to download an account created by the academic institution (10) which can be accessed through a web browser.
- Set permissions (13): the students (10) or the academic institution (5) can manage the permissions of the certificates. For example, they can activate or deactivate the URL to visualise it.
- List certificates (14): the academic institution (5) can list all the issued certificates. The information displayed can be sorted using multiple criteria and searched using information fields of the academic certificates.
- Revoke certificate (15): the academic institution (5) can revoke an academic certificate.
- Visualise certificate (16): every entity (5, 10, 11) can visualise an academic certificate if they have the URL of this academic certificate and it is activated.

## Claims

1. System for issuing and validating certificates, comprising:
- a public permissioned blockchain network (1), configured with:
∘ a plurality of nodes connected through a communication network;
∘ a certificate service repository (2) comprising the data of the certificates and emission/revocation logic thereof;
∘ access control logic (3) comprising one or more smart contracts to manage the access control to private information stored in the certificate service repository (2);
wherein the system further comprises:
- a certifying institution network (4), comprising one or more computing means connected to a communication network and configured with a plurality of computing processes and operations, wherein the certifying institution network (4) further comprises:
∘ a public-permissioned blockchain node (6) of the permissioned blockchain network (1) managed by a certifying institution (5);
∘ a distributed peer-to-peer storage/content distribution platform (6');
wherein said blockchain node (6) is configured to allow both the interaction of the certifying institution network with the blockchain network (1) through the execution of smart contracts and the storage of copies of the certificates in the distributed peer-to-peer storage/content distribution platform (6');
∘ one or more computing means configured with a certificate management service (7) adapted for issuing and revoking certificates by the certifying institution (5), wherein the certificate management service (7) is connected through a communication network with the public permissioned blockchain network (1), through the public permission blockchain node (6) and the distributed peer-to-peer storage/content distribution platform (6');
∘ one or more computing means configured with a plurality of offchain (8) services used by the certifying institution (5) to manage the access to the certificates by users not connected to the public permissioned blockchain network (1), wherein the offchain (8) services are also connected with the public-permissioned blockchain network (1), through the public permission blockchain node (6) and the distributed peer-to-peer storage/content distribution platform (6');
- an external network (9) comprising a plurality of computing devices used by users (10) or other third-party service providers (11) not directly connected to the blockchain environment (1), configured to interact with the certificates stored at the distributed peer-to-peer storage/content distribution platform (6') through the offchain services (8).

2. System according to the preceding claim, wherein at least part of the information comprised in the repository (2) is encrypted.

3. System according to any of the preceding claims, wherein the access control logic (3) is configured through a hierarchy of user information, group information and resource information, wherein the resource information is encrypted in the certificate service repository (2).

4. System according to the preceding claim, wherein the resource information is encrypted through an encryption key with a shared secret obtained as a result of an Elliptic-Curve Diffie Hellman (ECDH) protocol.

5. System according to the preceding claim, wherein the elliptic curves of the protocol comprise the curve Secp256k1.

6. System according to any of the preceding claims, wherein the computing devices of the external network (9) comprise a mobile device connected to the offchain service (8) through a communication network.

7. System according to any of the preceding claims, wherein the offchain services (8) are configured to perform are one or more of the following operations through one or more computing devices:
- issue certificates (12): the certifying institution (5) can issue academic certificates and register in the blockchain network (1), by means of the public permission blockchain node (6) and the distributed storage/content distribution platform (6');
- set permissions (13): the users (10) or the certifying institution (5) can manage the permissions of the certificates;
- list certificates (14): the certifying institution (5) can list issued certificates;
- revoke certificates (15): the certifying institution (5) can revoke certificates;
- visualise certificates (16): the certifying institution (5), the users (10) or other third-party service providers (11) can visualise an academic certificate.

8. System according to the preceding claim, wherein the result of the issue operation (12) is adapted to generate a unique URL of the academic certificate.

## Patentansprüche

1. - System zur Ausgabe und Validierung von Zertifikaten, Folgendes umfassend:
- ein öffentliches zugelassenes Blockchain-Netzwerk (1), ausgebildet mit:
∘ einer Vielzahl von Knoten, die über ein Kommunikationsnetz verbunden sind;
∘ einen Zertifikatsdienstspeicher (2), der die Daten der Zertifikate und deren Ausstellungs-/Widerrufslogik enthält;
∘ einer Zugangskontrolllogik (3), die einen oder mehrere intelligente Verträge umfasst, um die Zugangskontrolle zu privaten Informationen zu verwalten, die in dem Zertifikatsdienstspeicher (2) gespeichert sind;
wobei das System ferner Folgendes umfasst:
- ein Zertifizierungsinstitution-Netzwerk (4), das ein oder mehrere Rechenmittel umfasst, die mit einem Kommunikationsnetzwerk verbunden und mit einer Vielzahl von Rechenprozessen und -operationen ausgebildet sind, wobei das Zertifizierungsinstitution-Netzwerk (4) ferner Folgendes umfasst:
∘ einen öffentlich zugelassenen Blockchain-Knoten (6) des zugelassenen Blockchain-Netzwerks (1), der von einer Zertifizierungsinstitution (5) verwaltet wird;
∘ eine verteilte Peer-to-Peer-Speicher-/Inhaltsverteilungsplattform (6');
wobei der Blockchain-Knoten (6) so ausgebildet ist, dass er sowohl die Interaktion des Zertifizierungsinstitution-Netzwerks mit dem Blockchain-Netzwerk (1) durch die Ausführung von intelligenten Verträgen als auch die Speicherung von Kopien der Zertifikate in der verteilten Peer-to-Peer-Speicher-/Inhaltsverteilungsplattform (6') ermöglicht;
∘ ein oder mehrere Rechenmittel, die mit einem Zertifikatsverwaltungsdienst (7) ausgebildet sind, der für die Ausgabe und den Widerruf von Zertifikaten durch die Zertifizierungsinstitution (5) geeignet ist, wobei der Zertifikatsverwaltungsdienst (7) über ein Kommunikationsnetzwerk mit dem öffentlich zugelassenen Blockchain-Netzwerk (1) über den öffentlich zugelassenen Blockchain-Knoten (6) und die verteilte Peer-to-Peer-Speicher-/Inhaltsverteilungsplattform (6') verbunden ist;
∘ ein oder mehrere Rechenmittel, die mit einer Vielzahl von Offchain-Diensten (8) ausgebildet sind, die von der Zertifizierungsinstitution (5) verwendet werden, um den Zugang auf die Zertifikate durch Benutzer zu verwalten, die nicht mit dem öffentlich zugelassenen Blockchain-Netzwerk (1) verbunden sind, wobei die Offchain-Dienste (8) auch mit dem öffentlich zugelassenen Blockchain-Netzwerk (1) über den öffentlich zugelassenen Blockchain-Knoten (6) und die verteilte Peer-to-Peer-Speicher-/Inhaltsverteilungsplattform (6') verbunden sind;
- ein externes Netzwerk (9), das eine Vielzahl von Rechengeräten umfasst, die von Benutzern (10) oder anderen Drittdienstanbietern (11) verwendet werden, die nicht direkt mit der Blockchain-Umgebung (1) verbunden sind, und die so ausgebildet sind, dass sie mit den Zertifikaten, die in der verteilten Peer-to-Peer-Speicher-/Inhaltsverteilungsplattform (6') gespeichert sind, über die Offchain-Dienste (8) interagieren.

2. System nach dem vorhergehenden Anspruch, wobei mindestens ein Teil der im Speicher (2) enthaltenen Informationen verschlüsselt ist.

3. System nach einem der vorhergehenden Ansprüche, wobei die Zugangskontrolllogik (3) durch eine Hierarchie von Benutzerinformationen, Gruppeninformationen und Ressourceninformationen ausgebildet ist, wobei die Ressourceninformationen in dem Zertifikatsdienstspeicher (2) verschlüsselt sind.

4. System nach dem vorhergehenden Anspruch, wobei die Ressourceninformation durch einen Verschlüsselungsschlüssel mit einem gemeinsamen Geheimnis verschlüsselt wird, das als Ergebnis eines Elliptic Curve Diffie Hellman (ECDH)-Protokolls erhalten wird.

5. System nach dem vorhergehenden Anspruch, wobei die elliptischen Kurven des Protokolls die Kurve Secp256k1 umfassen.

6. System nach einem der vorhergehenden Ansprüche, wobei die Rechengeräte des externen Netzes (9) ein mobiles Gerät umfassen, das über ein Kommunikationsnetz mit dem Offchain-Dienst (8) verbunden ist.

7. System nach einem der vorhergehenden Ansprüche, wobei die Offchain-Dienste (8) so ausgebildet sind, dass sie eine oder mehrere der folgenden Operationen über eine oder mehrere Rechengeräte durchführen:
- Zertifikate ausgeben (12): die Zertifizierungsinstitution (5) kann akademische Zertifikate ausstellen und sich im Blockchain-Netzwerk (1) registrieren, mittels des öffentlich zugelassenen Blockchain-Knotens (6) und der verteilten Speicher-/Inhaltsverteilungsplattform (6');
- Zulassungen festlegen (13): Die Nutzer (10) oder die Zertifizierungsinstitution (5) können die Zulassungen der Zertifikate verwalten;
- Zertifikate auflisten (14): Die Zertifizierungsinstitution (5) kann die ausgegebenen Zertifikate auflisten;
- Zertifikate widerrufen (15): Die Zertifizierungsinstitution (5) kann Zertifikate widerrufen;
- Zertifikate visualisieren (16): Die Zertifizierungsinstitution (5), die Nutzer (10) oder andere Drittanbieter (11) können ein akademisches Zertifikat visualisieren.

8. System nach dem vorhergehenden Anspruch, wobei das Ergebnis der Ausgabeoperation (12) geeignet ist, eine eindeutige URL des akademischen Zertifikats zu erzeugen.

## Revendications

1. - Système d'émission et de validation de certificats, comprenant :
- un réseau blockchain public autorisé (1), configuré avec :
∘ une pluralité de nœuds connectés par un réseau de communication ;
∘ un référentiel de services de certificats (2) comprenant les données des certificats et leur logique d'émission/révocation ;
∘ une logique de contrôle d'accès (3) comprenant un ou plusieurs contrats intelligents pour gérer le contrôle d'accès aux informations privées stockées dans le référentiel de services de certificats (2) ;
dans lequel le système comprend en outre :
- un réseau d'institutions de certification (4), comprenant un ou plusieurs moyens informatiques connectés à un réseau de communication et configurés avec une pluralité de processus et d'opérations informatiques, dans lequel le réseau d'institutions de certification (4) comprend en outre :
∘ un nœud de blockchain publique-permis (6) du réseau de blockchain permis (1) géré par une institution de certification (5) ;
∘ une plateforme distribuée de stockage/de distribution de contenu de pair à pair (6') ;
dans lequel ledit nœud de blockchain (6) est configuré pour permettre à la fois l'interaction du réseau de l'institution de certification avec le réseau de blockchain (1) par l'exécution de contrats intelligents et le stockage de copies des certificats dans la plateforme distribuée de stockage/distribution de contenu de poste à poste (6') ;
∘ un ou plusieurs moyens de calcul configurés avec un service de gestion de certificats (7) adapté pour émettre et révoquer des certificats par l'institution de certification (5), dans lequel le service de gestion de certificats (7) est connecté par un réseau de communication avec le réseau blockchain à autorisation publique (1), par l'intermédiaire du nœud blockchain à autorisation publique (6) et de la plateforme distribuée de stockage/de distribution de contenu de poste à poste (6') ;
∘ un ou plusieurs moyens informatiques configurés avec une pluralité de services hors chaîne (8) utilisés par l'institution de certification (5) pour gérer l'accès aux certificats par des utilisateurs non connectés au réseau du blockchain à autorisation publique (1), dans lequel les services hors chaîne (8) sont également connectés au réseau du blockchain à autorisation publique (1), par l'intermédiaire du nœud du blockchain à autorisation publique (6) et de la plate-forme de stockage/distribution de contenu distribuée de poste à poste (6') ;
- un réseau externe (9) comprenant une pluralité de dispositifs informatiques utilisés par des utilisateurs (10) ou d'autres fournisseurs de services tiers (11) non directement connectés à l'environnement blockchain (1), configurés pour interagir avec les certificats stockés au niveau de la plateforme distribuée de stockage/de distribution de contenu de pair à pair (6') par l'intermédiaire des services offchain (8).

2. Système selon la revendication précédente, dans lequel au moins une partie des informations comprises dans le référentiel (2) est chiffrée.

3. Système selon l'une quelconque des revendications précédentes, dans lequel la logique de contrôle d'accès (3) est configurée à travers une hiérarchie d'informations d'utilisateurs, d'informations de groupes et d'informations de ressources, les informations de ressources étant cryptées dans le référentiel de services de certificats (2).

4. Système selon la revendication précédente, dans lequel les informations de ressources sont cryptées par une clé de cryptage avec un secret partagé obtenu à la suite d'un protocole Elliptic-Curve Diffie Hellman (ECDH).

5. Système selon la revendication précédente, dans lequel les courbes elliptiques du protocole comprennent la courbe Secp256k1.

6. Système selon l'une quelconque des revendications précédentes, dans lequel les dispositifs informatiques du réseau externe (9) comprennent un dispositif mobile connecté au service offchain (8) par un réseau de communication.

7. Système selon l'une quelconque des revendications précédentes, dans lequel les services offchain (8) sont configurés pour effectuer sont une ou plusieurs des opérations suivantes à travers un ou plusieurs dispositifs informatiques :
- émettre des certificats (12) : l'institution de certification (5) peut émettre des certificats académiques et s'inscrire dans le réseau blockchain (1), au moyen du nœud blockchain de permission publique (6) et de la plateforme de stockage distribué/distribution de contenu (6') ;
- définir les permissions (13) : les utilisateurs (10) ou l'institution de certification (5) peuvent gérer les permissions des certificats ;
- lister les certificats (14) : l'institution de certification (5) peut lister les certificats émis ;
- révoquer des certificats (15) : l'institution de certification (5) peut révoquer des certificats ;
- visualiser les certificats (16) : l'institution de certification (5), les utilisateurs (10) ou d'autres fournisseurs de services tiers (11) peuvent visualiser un certificat académique.

8. Système selon la revendication précédente, dans lequel le résultat de l'opération d'émission (12) est adapté pour générer une URL unique du certificat académique.
